# EUROPEAN PATENT APPLICATION

(11) **EP 1 646 196 A1**
(43) Date of publication of application: **12.04.2006**
(21) Application number: 04104896.8
(22) Date of filing: 06.10.2004
(51) Int. Cl.: H04L 27/30

(54) **Differential phase coding in wireless communications system**

(71) Applicant: Koninklijke Philips Electronics N.V., 5621 BA Eindhoven (NL)
(72) Inventor: The designation of the inventor has not yet been filed
(74) Representative: Verdonk, Peter Lambert F. M.

(57) **Abstract**

In a wireless communications system, such as a multiband Ultra Wideband communications system, data is transmitted by means of the phases of pulses in multiple frequency bands. Data is encoded in the phase difference between a pulse and a previously transmitted pulse. The previously transmitted pulse may be the immediately preceding pulse in the same frequency band, or may be separated from the present pulse by a number of intervening pulses.

## Description

This invention relates to wireless communications, and in particular to a method for encoding data in a wireless communications system. More particularly, the invention relates to a system and a method for encoding data, for use in an Ultra Wideband (UWB) wireless communications system.

The term Ultra Wideband is used to refer to a number of different wireless communications systems. In one form of Ultra Wideband (UWB) communications system, a transmitter encodes data to generate a series of pulses, which are transmitted at radio frequencies. The function of the receiver is then to detect these pulses, in order to be able to extract the data from the transmitted signal.

In one particular proposed form of UWB communications system, the available bandwidth is divided into multiple bands, and data symbols are divided into multiple pulses, with the pulses making up a symbol being transmitted in different bands. The data is transmitted by encoding the data onto the phase, or polarity, of a carrier signal within each of the multiple bands. Thus, within each of the frequency bands, a pulse transmitted with a first phase, or polarity, represents a first binary value, while a pulse transmitted with a second phase, or polarity, represents a second binary value.

The document "General Atomics - PHY proposal", N. Askar, IEEE 802.15-03/105r0 outlines a system of this type.

Within the receiver in such a system, therefore, it is necessary to detect the phase of the received pulses, within each of the frequency bands, in order to be able to determine the data which is being transmitted in that band. One problem which arises with this is that it is necessary to have extremely stable, and identical, reference frequency generators in the transmitter and the receiver. In practice, it is extremely difficult to achieve this, however.

According to a first aspect of the present invention, there is provided a communications system, in which data is transmitted by means of the phase of a pulse transmitted in one of said frequency bands, relative to the phase of a previous pulse signal transmitted in said one of said frequency bands.

The fact that data is encoded in the relative phase of two pulses means that it is not necessary to be able to measure the absolute phase of each pulse with high accuracy.

Also, although it may be advantageous, it is not essential for the local oscillators, which generate the signals at the frequencies of said frequency bands, to be coupled together.

According to a second aspect of the invention, there is provided a method of transmitting and receiving data in a multiband wireless communications system, the method comprising: in at least one frequency band, transmitting a series of pulses, such that the phases of said pulses relative to predetermined previously transmitted pulses encodes transmitted data; and, in a receiver, determining the phases of said pulses relative to the phases of the previously transmitted pulses, and decoding the transmitted data.

The method may advantageously be applied in each frequency band of a multiband wireless communications system, for example an Ultra Wideband (UWB) wireless communications system.
Fig. 1 is a block schematic diagram of a transmitter forming part of a radio communications system in accordance with the invention.
Fig. 2 is a block schematic diagram of a receiver in a system in accordance with the present invention.
Fig. 3 is a flow chart illustrating a method of operation of the system in accordance with the invention.

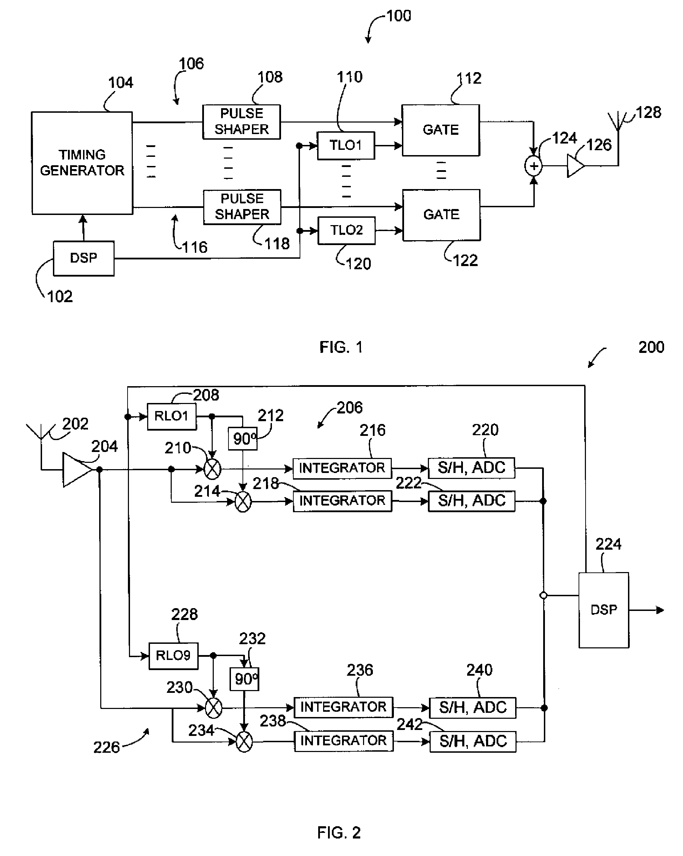

Figure 1 is a block schematic diagram of a transmitter 100, forming part of a wireless communications system. In particular, the invention is described herein with particular reference to its application in a multiband Ultra Wideband (UWB) wireless communications system. A definition of UWB systems is that a signal occupies a bandwidth of more than 500 MHz, in the band from 3.1 to 10.6 GHz. In one type of UWB system, the available bandwidth is divided into multiple individual bands. In this illustrated embodiment of the invention, there are nine such bands, although the exact number can be different in different implementations of the invention.

In the transmitter illustrated in Figure 1, the data which is to be transmitted is generated and/or processed in a digital signal processor (DSP) 102 of the transmitter 100. The data is then passed to a timing generator 104, where it is divided amongst the nine separate frequency bands. As illustrated in Figure 1, the transmission path 106 for the first band includes a pulse shaper 108, in which a pulse, or burst, is formed from the data being transmitted from the first transmission path 106. The first transmission path 106 further includes a first transmitter local oscillator (TLO1) 110, which generates a frequency in a first band of the total available bandwidth.

The pulse from the pulse shaper 108, and the first local oscillator signal from the local oscillator 110, are then supplied to a gate 112, in which the pulse, or burst, is used to modulate the local oscillator signal.

The other transmission paths operate in the same way, although in Figure 1 only the ninth transmission path 116 is shown, for simplicity. Thus, the data allocated for transmission in the ninth frequency band is passed to a pulse shaper 118, and the resulting pulse is combined with a local oscillator signal from a ninth transmitter local oscillator (TLO9) 120 in a gate 122, to form a signal at a frequency in the ninth band.

In principle, the phases and frequencies of the local oscillators TLO1-TLO9 can be independent, and can be generated separately. However, in practice, it is advantageous for the phases and frequencies of the local oscillators to be at least somewhat related. For example, in one preferred embodiment of the invention, the local oscillator frequencies TLO1-TL09 may all be obtained from just one standard local oscillator, with phase locked loops establishing the desired relationship between the local oscillator signals, although this is not essential.

Further, in accordance with the present invention, the phases of the pulses generated by the pulse shapers 108, 118 are used to encode the data which is to be transmitted.

More specifically, in this illustrated embodiment of the invention, in each of the frequency bands, the data is encoded in the phase difference between the phase of a transmitted pulse and the phase of a previously transmitted pulse.

Still more specifically, in this illustrated embodiment of the invention, in each of the frequency bands, the data is encoded in the phase difference between the phase of a transmitted pulse and the phase of the immediately preceding pulse.

For example, in the case of a binary coding scheme, a pulse having a first phase difference Φ₁ from the immediately preceding pulse may represent a binary'1', while a pulse having a second phase difference Φ₂ from the immediately preceding pulse may represent a binary'0.

Other, more complex, multi-phase coding schemes are also possible. For example, a coding scheme can define any number N of possible phase differences Φₖ, for example kπ/N, where k = 0, 1, ..., N-1, between the phase of a transmitted pulse and the phase of the immediately preceding pulse, with each of these phase differences encoding a different multi-bit binary value.

It will be noted that only phase differences Φ between 0° and 180° are chosen, such that no ambiguity arises between phase differences +Φ and -Φ.

Although the invention is described in this embodiment such that it is the phase difference between two successive pulses which encodes the transmitted data, it would also be possible to encode transmitted data in the phase difference between a pulse and any previously transmitted pulse. For example, in a sequence of pulses pᵢ, for i = 0, 1, 2, 3, ..., the transmitted data can be encoded in the phase difference between pulses pᵢ and p_{(i-4)·} That is, the transmitted data is encoded in the phase difference between two pulses separated by three intervening pulses. This allows four interlaced streams of pulses to be transmitted in a frequency band. It will be realized that the transmitted data can be encoded in the phase difference between two pulses separated by any number of intervening pulses. However, this number should not be selected to be too large.

An advantage of the present invention is that it is not necessary for the absolute value of the phase of the transmitted pulses to be known, provided that the uncertainty remains sufficiently constant between the two pulses whose phase difference encodes the transmitted data. Where the transmitted data is encoded in the phase difference between two pulses separated by a number of intervening pulses, this places a greater requirement on the stability of the transmitter and the receiver.

The signals generated by the gates in the nine transmission paths are then combined in an adder 124, and the resulting signal is amplified in a power amplifier 126, before being passed to a transmit antenna 128.

Figure 2 is a block schematic diagram showing the form of a receiver 200, adapted to receive signals transmitted from a transmitter 100 of the type shown in Figure 1.

Signals are received at an antenna 202, and then amplified in an amplifier 204. The resulting signal, containing components in all of the frequency bands, is then passed into nine reception paths, each of which detects the signals in a respective one of those frequency bands.

Thus, in a first reception path 206, a first receiver local oscillator (RLO1 ) 208 generates a local oscillator signal at a frequency within the first band, and this local oscillator signal is passed to a first mixer 210, and is passed through a 90° phase shifter 212 to a second mixer 214. The mixers 210, 214 are connected to receive the received signal passed into the first reception path 206, and therefore detect the in-phase and quadrature components of that signal at the first local oscillator frequency. The in-phase and quadrature components are both detected, to avoid the possibility that the phase of the received signal is at 90° to the phase of the local oscillator signal, in which case the received signal may not be detected.

The outputs of the mixers 210, 214 are passed to respective integrators 216, 218, and the integrated outputs are passed to respective blocks 220, 222, which each perform a sample and hold function and an analog-digital conversion function. As a result of the high data rate which can be achieved in a UWB communications system, these blocks need to sample the signal at an appropriately high rate. For example, the sample period may need to be of the order of 100ps - 1ns.

The blocks 220, 222 therefore produce respective digital outputs representing the in-phase and quadrature components of the signal at the first local oscillator frequency. These signals are then passed to a digital signal processor 224. Together, the digital outputs representing the in-phase and quadrature components of the signal at the first local oscillator frequency are a suitable measure of the signal received at that frequency.

Again, the receiver 200 contains nine such reception paths, of which only the first and the ninth are shown in Figure 2 for the purposes of simplicity.

In the ninth reception path 226, the ninth receiver local oscillator (RL09) 228 generates a local oscillator signal at a frequency in the ninth frequency band, and this is passed to a corresponding first mixer 230, and through a 90° phase shifter 232 to a corresponding second mixer 234. As before, the outputs of the first and second mixers 230, 234 are passed to respective integrators 236, 238, and then to blocks 240, 242 which perform sample and hold and analog-digital conversion functions.

As in the first reception path 206, therefore, the blocks 240, 242 generate digital signals representing the in-phase and quadrature components of the signal in the ninth frequency band. Again, these digital signals are passed to the digital signal processor 224.

In order to ensure that the received signals are detected correctly, it is necessary that the local oscillators RLO1-RL09 in the receiver have frequencies, and phases, which are sufficiently close to the frequencies and phases of the local oscillators TLO1-TL09 in the transmitter 100. Thus, as discussed above with reference to the generation of the local oscillator frequencies TLO1-TL09 in the transmitter, steps must also be taken to ensure that the local oscillator frequencies RLO1-RL09 meet these required conditions. As in the transmitter, for example, the local oscillator frequencies RLO1-RLO9 may all be obtained from just one standard local oscillator. In this case, phase locked loops can then be used to establish the desired relationship between the local oscillator signals.

In accordance with this embodiment of the present invention, the detected information depends on the differences of the phases of the pulses received in each frequency band, and so the absolute values of the phases are less important.

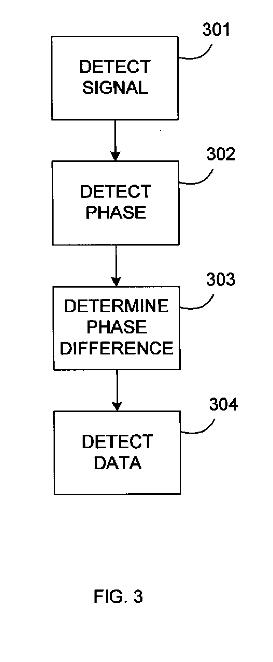

Figure 3 is a flow chart illustrating a presently preferred method of detecting the transmitted data in the receiver 200.

In step 301 of the process, received signals are detected in the frequency bands of the system. In the description below, only a first frequency band will be considered further, although the same process is carried out for each frequency band, either dependent on the other frequency bands, or independently of the other frequency bands.

In step 302, the phase of the received pulse in the first frequency band are detected. As mentioned above, the blocks 220, 222, 240, 242 generate digital signals representing the in-phase and quadrature components of the signals in the respective frequency bands. These can then be used in the digital signal processing block 224 to detect the phase angles of the respective signals.

In step 303, the detected phase angle of the received pulse in the first frequency band is compared to the phase angle of a previously received pulse. As described above, the previously received pulse of interest may be the immediately preceding pulse, or may be a pulse separated from the present pulse by a known number of intervening pulses.

As described above, the transmitter uses these phase differences to encode data for transmission, and so the receiver can detect the transmitted data from the detected phase differences.

Thus, depending upon the coding scheme used in the transmitter, as described above, the determined phase difference represents a particular binary value, which may be a multi-bit binary value.

Thus, in step 304, the receiver detects the binary value, represented by the detected phase difference, for the received pulse.

This procedure is carried out for each received pulse in each of the nine frequency bands, either dependent on the other frequency bands, or independently of the other frequency bands, and the transmitted data can be recreated.

Thus, the system and method described herein allow the accurate detection of the transmitted data. Further, the arrangement has the advantage that the requirements imposed on the frequency generation are greatly reduced. That is, any moderate variation in the local oscillators within the transmitter or will not affect the detection of the data in the receiver. Similarly, there is a reduced requirement for absolute frequency accuracy in the local oscillators within the receiver.

In summery the invention relates to a wireless communications system, such as a multiband Ultra Wideband communications system, in which data is transmitted by means of the phases of pulses in multiple frequency bands. Data is encoded in the phase difference between a pulse and a previously transmitted pulse. The previously transmitted pulse may be the immediately preceding pulse in the same frequency band, or may be separated from the present pulse by a number of intervening pulses.

## Claims

1. A communications system, in which data is transmitted by means of pulses in multiple frequency bands, wherein data is encoded in the phase of a pulse in a frequency band relative to the phase of a previously transmitted pulse.

2. A communications system as claimed in claim 1, wherein data is encoded in the phase of a pulse in a first frequency band relative to the phase of a previously transmitted pulse in said first frequency band.

3. A communications system as claimed in claim 2, wherein data is encoded in the phases of pulses in each of said frequency bands, relative to the phases of previously transmitted pulses in said respective frequency bands.

4. A communications system as claimed in claim 2, wherein data is encoded in the phase of a pulse in a first frequency band relative to the phase of an immediately preceding pulse in said first frequency band.

5. A communications system as claimed in claim 2, wherein data is encoded in the phase of a first pulse in a first frequency band relative to the phase of a second pulse in said first frequency band, said second pulse being separated from said first pulse by a plurality of intervening pulses.

6. A communications system as claimed in any preceding claim, wherein data is encoded by means of a binary coding scheme, such that a pulse having a first phase difference Φ₁ from the previously transmitted pulse represents a binary'1', while a pulse having a second phase difference Φ₂ from the previously transmitted pulse represents a binary'0.

7. A communications system as claimed in one of claims 1-5, wherein data is encoded by means of a multi-phase coding scheme, defining a plurality N of possible phase differences Φₖ = kπ/N, where k = 0, 1, ..., N-1, between the phase of a transmitted pulse and the phase of the previously transmitted pulse, with each of the possible phase differences encoding a different multi-bit binary value.

8. A communications system as claimed in any preceding claim, wherein the communications system is an Ultra Wideband wireless communications system.

9. A method of transmitting data in a multiband wireless communications system, the method comprising: encoding data in the phase of a pulse in a frequency band relative to the phase of a previously transmitted pulse.

10. A method as claimed in claim 9, wherein data is encoded in the phase of a pulse in a first frequency band relative to the phase of a previously transmitted pulse in said first frequency band.

11. A method as claimed in claim 10, wherein data is encoded in the phases of pulses in each of said frequency bands, relative to the phases of previously transmitted pulses in said respective frequency bands.

12. A method as claimed in claim 10, wherein data is encoded in the phase of a pulse in a first frequency band relative to the phase of an immediately preceding pulse in said first frequency band.

13. A method as claimed in claim 10, wherein data is encoded in the phase of a first pulse in a first frequency band relative to the phase of a second pulse in said first frequency band, said second pulse being separated from said first pulse by a plurality of intervening pulses.

14. A method as claimed in any of claims 9-13, wherein data is encoded by means of a binary coding scheme, such that a pulse having a first phase difference Φ₁ from the previously transmitted pulse represents a binary '1', while a pulse having a second phase difference Φ₂ from the previously transmitted pulse represents a binary'0.

15. A method as claimed in one of claims 9-13, wherein data is encoded by means of a multi-phase coding scheme, defining a plurality N of possible phase differences Φₖ = kπ/N, where k = 0, 1, ..., N-1, between the phase of a transmitted pulse and the phase of the previously transmitted pulse, with each of the possible phase differences encoding a different multi-bit binary value.

16. A method as claimed in any preceding claim, wherein the communications system is an Ultra Wideband wireless communications system.

17. A method of receiving transmitted data, the method comprising:
- determining the phases of pulses received in at least one frequency band, relative to the phases of pulses previously received in said frequency band; and
- decoding transmitted data on the basis of the relative phases.

18. A method as claimed in claim 17, wherein the communications system is an Ultra Wideband wireless communications system.

19. A transmitter, for use in a multiband wireless communications system, the transmitter comprising:
- frequency generators, for generating signals at a plurality of frequencies in respective frequency bands;
- a plurality of modulators, for generating modulated pulses at said plurality of frequencies;
- wherein said plurality of modulators are adapted to generate modulated pulses, such that the phase of a pulse at a first of said plurality of frequencies, relative to the phase of a previously transmitted pulse at said first frequency, is determined by data to be transmitted.

20. A transmitter as claimed in claim 19, wherein said frequency generators comprise a single local oscillator reference frequency generator, and means for generating said signals at said plurality of frequencies in respective frequency bands there from.

21. A receiver, for use in a multiband wireless communications system, the receiver comprising:
- frequency generators, for generating signals at a plurality of frequencies in respective frequency bands;
- means for detecting phases of pulses transmitted at said plurality of frequencies, wherein said means for detecting phases is adapted to determine phase differences, between the phases of pulses at a first of said plurality of frequencies, relative to the phases of respective previously transmitted pulses at said first frequency; and
- means for decoding transmitted data from said determined phase differences.

22. A receiver as claimed in claim 21, wherein said frequency generators comprise a single local oscillator reference frequency generator, and means for generating said signals at said plurality of frequencies in respective frequency bands there from.
